# EUROPEAN PATENT SPECIFICATION

(11) **EP 3 208 494 B1**
(45) Date of publication and mention of the grant of the patent: **30.12.2020**
(21) Application number: 16156690.6
(22) Date of filing: 22.02.2016
(51) Int. Cl.: F16H 3/18

(54) **GEARBOX**
GETRIEBE
BOÎTE DE VITESSE

(43) Date of publication of application: 23.08.2017
(73) Proprietor: GearMotive Oy, 85430 Sievi (FI)
(72) Inventor: Hietamäki, Riku, 85430 Sievi (FI)
(74) Representative: Kolster Oy Ab

(56) References cited:
- EP-A1- 0 022 411
- EP-A1- 0 549 540
- US-A- 4 263 815

## Description

### FIELD OF THE INVENTION

The present invention relates to gearboxes.

The gearbox comprises: a housing, an input shaft for receiving rotational movement, an output shaft for outputting rotational movement, at least one pair of gear elements, said pair of gear elements comprising a driver gear element on the input shaft and a driven gear element on the output shaft, said driver gear element being arranged to rotate the driven gear element, the gearbox also comprising releasable locking means to lock the driven gear element to output shaft in order to rotate the output shaft to the first rotational direction, the gearbox further comprising an intermediate gear element on an additional shaft, the gearbox further comprising a further gear element on the output shaft, said intermediate gear element being arranged to be moved to a position where it is arranged to rotate the further gear element that is on the output shaft and thereby also to rotate the output shaft to a reversal rotational direction that is opposite to said first rotation direction of the output shaft.

Document US4263815 discloses a gearbox falling within the wording of the pre-characterizing portion of claim 1.

The role of the gearbox is to convert torque in such a manner that the engine at the input side of the gearbox and the load at the output side of the gearbox fit to each other in a more suitable way. As an example, the engine could be a combustion engine or an electric engine and the loa d could be a driveline shaft for delivering power to the wheels of a vehicle or a operating shaft of a machine or a tool.

Gearboxes are widely used in various applications. Vehicles such as trucks, tractors, vans, passenger cars and racing/rally cars are some examples. Gearboxes are also used in industrial equipment such as metal processing machines.

For example in cars, the known gearboxes belonging to body of prior art are such that, regarding the reversal rotation, the intermediate gear element that rotates the further gear element locating on the output shaft is rotated by a special/extra driver gear unit that is located on the input shaft after the main driver gear i.e driver gear of the gear nr. 1. In practice, this special/extra driver gear unit on the input shaft locates between the driver gear of gear nr. 1 and the driver gear of gear nr. 2.

One of the problems associated with the above mentioned structure is that such structure requires more space, especially in the axial direction of the shafts, due to space needed by the special/extra driver gear unit locating after the first driver gear element, especially locating between the driver gear elements on the input shaft. Additional disadvantage is that the input shaft is more complex to be manufactured because for the reversal rotation of the output shaft a special/extra driver gear unit on the input shaft is needed, the role of which special/extra driver gear unit is to rotate the intermediate gear element, which intermediate gear element is for rotating the output shaft to a reversal direction by rotating the further gear element locating on the output shaft. The basic structure in known gearboxes limits the size of the locking means such as the so called dog ring.

### BACKGROUND OF THE INVENTION

### BRIEF DESCRIPTION OF THE INVENTION

It is thus an object of the present invention to provide a gearbox so as to alleviate the above mentioned disadvantages. The objects of the invention are achieved by a gearbox which is characterized by what is stated in the independent claim 1. The preferred embodiments of the invention are disclosed in the dependent claims.

The invention is based on the dual role of the driver gear on the input shaft of the gearbox and also based on the modified intermediate gear element on the additional shaft.

One of the advantages of the invention is that the gearbox, especially the input shaft is easier to be manufactured since there is no need to manufacture a reverse-mode dedicated extra gear unit anymore. Additionally, the invention is more efficient in using the space within the gearbox, meaning either that the gearbox can be smaller in size, especially in the axial direction of the shafts, and/or the gear elements can be wider in the axial direction therefore improving the durability and reliability of the gear elements. Also, the gearbox can contain, in the same space as before, more of those driver gear element - driven gear element pairs for forward mode of operation gears. An additional benefit is that the so called dog ring (ie. releasable locking means for locking driven gear element to the output shaft), locating next to the driven gear element on the output shaft, can be made narrower because parallel to the dog ring there is no more need for reserving space for the intermediate gear element locating on the additional shaft. The so called dog ring or other locking means can have larger diameter which is a benefit with regard to durability and usability. Preferred embodiments enhance the positive effects.

### BRIEF DESCRIPTION OF THE DRAWINGS

In the following the invention will be described in greater detail by means of preferred embodiments with reference to the accompanying] drawings, in which
Figure 1 shows a sideview of the gearbox,
Figure 2 shows a perspective view of the gearbox,
Figure 3 shows a sideview of the gearbox when the wide intermediate gear element on the additional shaft is moved to the right to connect the driver gear element on the input shaft also to the further gear element locating on the output shaft,
Figure 4 show an end view of the reverse gear related gear elements in the axial direction in the direction of arrow A of figure 1,

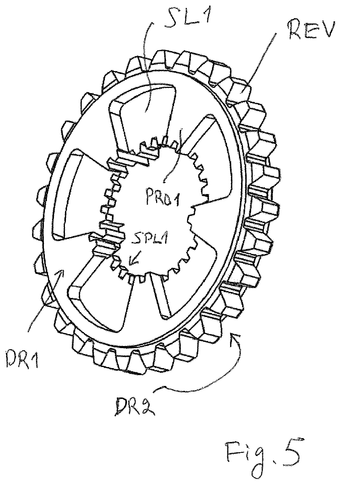

Figure 5 shows the releasable locking means ie. so called dog ring, being integrated with the reverse rotation related further gear element.

### DETAILED DESCRIPTION OF THE INVENTION

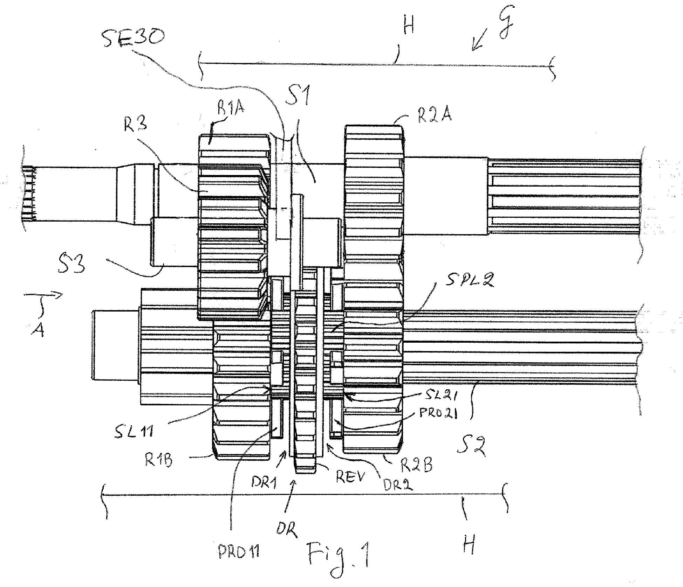

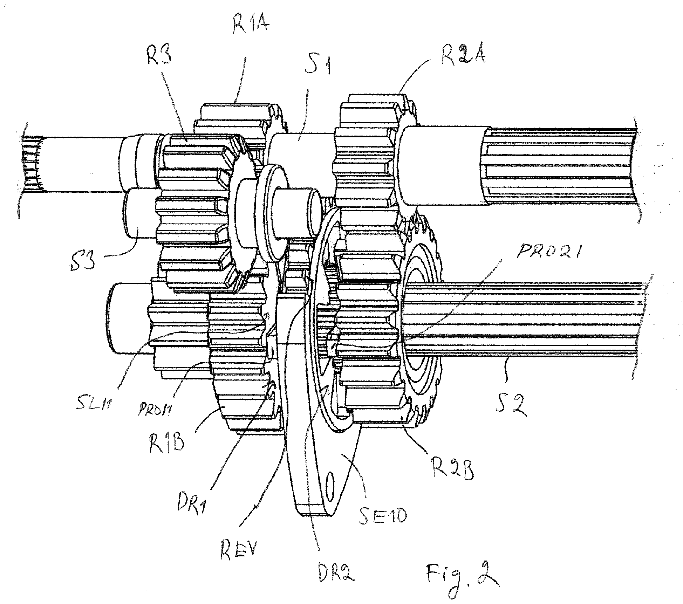

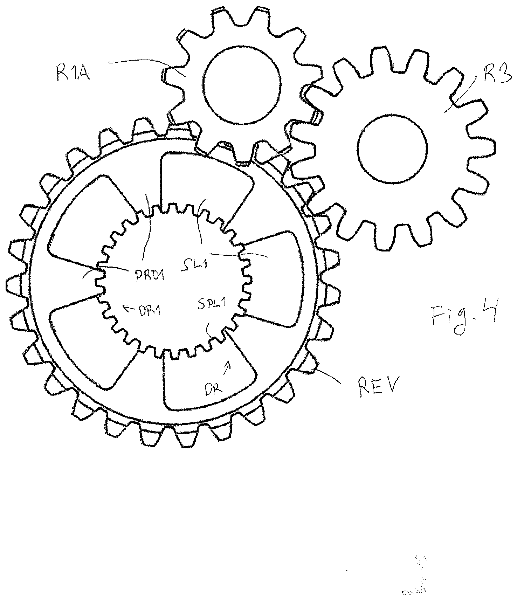

Referring first especially to figures 1-4, the gearbox G comprises a housing H, which is shown only partially because the key features are those that are within the inner space of the housing H.

The gearbox further comprises an input shaft S1 for receiving rotational movement, an output shaft S2 for outputting rotational movement and at least one pair of gear elements, said pair of gear elements comprising a first driver gear element R1A on the input shaft S1 and a first driven gear element R1B on the output shaft S2. The driver gear element R1A is arranged to rotate the driven gear element R1B. The driver gear element R1A is fixed to the input shaft S1 meaning that driver gear element R1A rotates when the input shaft S1 is rotated. The driver gear element R1A on the input shaft S1 and the first driven gear element R1B form a gear element pair for creating gear nr.1 of the gearbox.

In figures, the left hand end of input shaft S1 can be connected to a motor (not shown) via a clutch (not shown). In the embodiment shown in figures, the left hand end of the output shaft S2 can be connected to the driveline of the vehicle.

Corresponding to driver gear element R1A and driven gear element R1B, driven by the driver gear element R1A, the gearbox may comprise additional pair or pairs of gear elements, in order to create gear nr. 2, gear nr. 3 etc. In figures 1-4, the gearbox comprises a second driver gear element R2A on the input shaft S1 and a second driven gear element R2B on the output shaft S2. The driver gear element R2A is arranged to rotate the driven gear element R2B. The driver gear element R2A is fixed to the input shaft S1 meaning that driver gear element R2A rotates when the input shaft S1 is rotated. The driver gear element R2A on the input shaft S1 and the second driven gear element R2B form a gear element pair for creating gear nr. 2 of the gearbox.

Contrary to fixed relation of driver gear elements R1A, R2A with regard to input shaft S1, the driven gear elements R1B, R2B are rotating freely on bearings in relation to output shaft S2, unless the releasable locking means DR, comprised by the gearbox has locked driven gear element R1B or R2B non-rotationally in relation to output shaft S2. Locking means DR such as dog ring DR comprises first locking element DR1, for example a so called dog ring element DR1 that has protrutions PRO1 and slots SL1 between the protrusions PRO1. As a counterpart for the dog ring element DR1 i.e counterpart for the protrutions PRO1 and slots SL1, at the end of the driven gear element R1B the driven gear element R1B comprises a counter structure comprising respective slots SL11 and protrutions PRO11. Dog ring element DR1 with protrusions PRO1 and slots SL2 and on the other hand the slots SL11 and protrutions PRO11 at the end of the driven gear element R1B together form a so called dog clutch.

Locking element DR1 is supported on the output shaft S2 via splines SPL1, SPL2 i.e axially directed grooves and ridges, and therefore the locking element DR1 does not rotate in relation to output shaft S2 but locking element can be moved in axial direction, and therefore the locking element such as dog ring element DR1 is able to cause the driven gear element R1B to be non-rotational in relation to output shaft S2, meaning that when the first driven gear element R1B rotates also the output shaft S2 rotates.

The same is true with the second gear where the key parts are second driver gear element R2A, second driven gear element R2B and second locking element DR2 such as second dog ring element DR2 comprising protrusions PRO2 and slots SL2. As a counterpart for the second dog ring element DR2 i.e protrutions PRO2 and slots SL2, at the end of the second driven gear element R2B the driven gear element R2B comprises a counter structure comprising respective slots SL21 and protrutions PRO21. Dog ring element DR2 with protrusions PRO2 and slots SL2 and on the other hand the slots SL21 and protrutions PRO21 at the end of the second driven gear element R2B together form a so called dog clutch. Locking element DR2 is supported on the output shaft S2 via splines SPL1, SPL2 i.e axially directed grooves and ridges and therefore the locking element DR2 does not rotate in relation to output shaft S2, but locking element DR2 can be moved in axial direction. Therefore the locking element such as dog ring element DR2 is able to cause the second driven gear element R2B to be non-rotational in relation to output shaft S2, meaning that when the second driven gear element R2B rotates the also the output shaft S2 rotates.

Protrutions PRO1 and PRO2 contained by the dog ring DR can be called dogs. Likewise, protrusions PRO11 and PRO21 at the end of the driven gear elements R1B, R2B can be called dogs.

As stated, furthermore, the gearbox also comprises releasable locking means such as DR1 or DR2 to lock the driven gear element R1B or R2B to output shaft S2 in order to rotate the output shaft S2 to the first rotational direction, causing forward movement of the vehicle, should the gearbox be installed on the vehicle.

Additionally, the gearbox further comprises an intermediate gear element R3 on an additional shaft S3 , the gearbox further comprising a further gear element REV on the on the output shaft S2. The further gear element REV is located between the two driven gear elements R1B, R2B.

The reverse mode related further gear element REV, with dog ring DR, can alternatively be in a different location than between the driven gears of gear nr 1 and gear nr. 2. For example, the reverse mode related further gear element REV can be between driven gears of gear nr. 3 and gear nr. 4.

The intermediate gear element R3 is arranged to be moved to a position where it is arranged to rotate the further gear element REV that is on the output shaft S2 and thereby also to rotate the output shaft S2 to a reversal rotational direction that is opposite to said first rotation direction of the output shaft S2. The reversal rotation would cause reversal movement of the vehicle, should the gearbox be installed on the vehicle.

In a preferred embodiment, the locking means i.e one or both of the locking elements DR1, DR2 is/are integral with the further gear element REV. Since the embodiment shown in figures has two forward gears i.e gear nr. 1 and gear nr. 2, the locking elements DR1, DR2 are at both ends of the further gear element REV, in practise DR1 at the end that is facing the end of the first driven gear element R1B and DR2 at the at the end that is facing the end of the second driven gear element R2B.

The so called further gear element REV can be called a reverse-mode gear element since it causes the output shaft S2 to spin i.e to rotate in reversal direction than the rotation caused by driven gear element R1B and R2B.

In an embodiment, the further gear element REV and one or both of the locking elements i.e dog ring elements DR1, DR2 are one single integral machined or cast piece.

The gearbox is such that same driver gear element R1A that is for rotating the driven gear element R1B, is via the intermediate gear element R3 arranged also to rotate the further gear element REV that is on the output shaft S2 and thereby also to rotate the output shaft S2 to a reversal rotational direction that is opposite to said first rotation direction of the output shaft S2. The reversal operation is possible when the releasable locking element DR1 (or DR2) is not in the locking position i.e when the dog ring element DR1 does not lock the driven gear element R1B to rotate the output shaft S2, and when the dog ring element DR2 does not lock the driven gear element R2B to rotate the output shaft S2.

On other words, the dual roles of first driver gear R1A is at different times and in different situation. In both modes of operation (forward mode, reverse mode), the intermediate gear element R3, and the first driven gear element R1B, is/are rotated by the first driver gear element R1A. But in the first mode i.e in the forward mode, the rotation of the driver gear element R1A that rotates the driven gear element R1B, rotates the output shaft S2 to forward rotating direction, because the locking element DR1 has locked the driven gear element R1B and the shaft S2 to rotate together. Intermediate gear element R3 rotates freely, i.e intermediate gear element R3 is not in contact with any other gears than the driver gear element R1A when the gearbox is in forward mode, i.e when for example driver gear element R1A rotates driven gear element R1B or driver gear element R2A rotates driven gear element R2B in order to rotate output shaft S2.

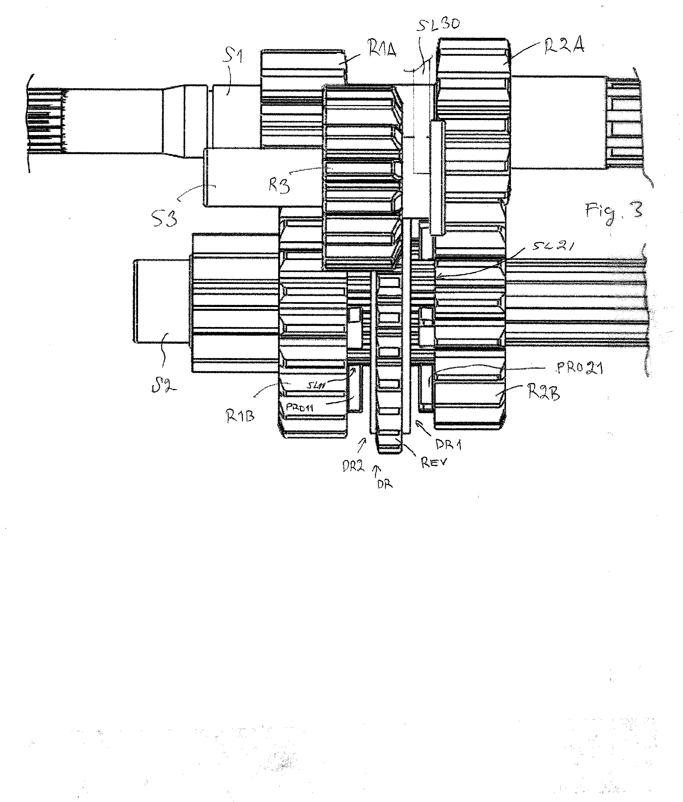

In the second mode of operation, i.e in the reversal mode, the intermediate gear element R3 is in the position as shown in fig. 3, wherein rotation of the driver gear element R1A rotates the intermediate gear element R3 which rotates the further gear element REV and the output shaft S2 to reversal direction. This reversal rotation is possible, even though the same driver gear element R1A at the same time rotates the driven gear element R1B that is on the output shaft S2, because the rotation of the driven gear element R1B does not cause forward direction rotation of output shaft S2 because the locking element DR1 is not in the locking position but in the release position.

As can be seen in fig. 3, the intermediate gear element R3 on the additional shaft S3 is wide enough to be in rotational contact at the same with both the driver gear element R1A (that is on the input shaft S1) and the reversal mode gear element REV i.e further gear element REV that is on the output shaft S2. Relating to above, the width, in the axial direction of the additional shaft S3, of the intermediate gear element R3 is greater than the distance between the opposing direction faced edges of the driver gear element R1A on the input shaft S1 and the further gear element REV on the output shaft S2.

In an embodiment, the width (in the axial direction) of the driver gear element R1A is bigger than the width of the intermediate gear element R3 in order to have enough space for intermediate gear element R3 to be parallel with driver gear element R1A.

In an embodiment, as an example only, the axial width of the toothed intermediate gear element R3 is 27 mm, and the distance between the driver gear element R1A and the reversal mode gear element REV i.e further gear element REV is 9 mm.

Therefore, in this embodiment, one third (33,3 %) of the width of the intermediate gear element R3 is against the driver gear element R1A. The axial gap between the driver gear element R1A and the reversal mode gear element REV i.e further gear element REV forms the second third of the width of the intermediate gear element R3. After the gap between the driver gear element R1A and the reversal mode gear element REV i.e further gear element REV, the last third (33,3 %) of the width of the intermediate gear element R3 is against the reversal mode gear element REV i.e further gear element REV. When combining the thirds together, it can be seen that in an embodiment at least two thirds of the width of the intermediate gear element R3 is against the driver gear element R1A or against the reversal mode gear element REV i.e further gear element REV.

According to the applicant, in an embodiment, at least 50 % of the the width of the intermediate gear element R3 is against the driver gear element R1A or the reversal mode gear element REV i.e further gear element REV, to secure a reliable and wear resisting operation of the gearbox. Of course, the intermediate gear element R3 is against both the driver gear element R1A and the reversal mode gear element REV i.e further gear element REV.

In an embodiment, the width, in the axial direction of the additional shaft, of the intermediate gear element R3 is at least 100 % greater than the axial distance between the opposing direction faced edges of the driver gear element R1A on the input shaft S1 and the further gear element REV on the output shaft S2. For example, if the axial distance is 9 mm, then the combined length of parallel contact areas between intermediate gear element R3 and and driver gear element R1A and between intermediate gear element R3 and the further gear element REV is at least 9 mm. Preferably in such way that length of parallel areas (tooth contact) is the same at both ends of the intermediate gear element R3, therefore in the example above, the tooth contact would be 4,5 mm on each side. Tooth contact can be application specific. The width of the intermediate gear element is at least the sum of the distance between driver gear element R1A and the further gear element REV and the doubled (because at both ends) tooth contact desired.

In order to move the intermediate gear element R3 to a reverse mode position, i.e to a position shown in fig. 3, the gear box comprises a shift element SE30. Another shift element SE10 is arranged to move the locking means such as locking element DR1 or DR2 to a locking position and backwards to a release position. Shift elements SE10, SE30 can be for example fork elements, moved by manually operated gear stick or moved by electrical or hydraulic actuator.

In an embodiment, the so called dog ring DR or other locking means DR for driver gear elements has larger diameter than intermediate gear element R3 and driver gear elements R1A, R2A. Also, this so called dog ring DR or other locking means DR has larger diameter than the driven gear elements R1B, R2B. The relatively large diameter of dog ring DR is possible because of the dual role or driver gear element R1A, which also delivers via intermediate gear element R3 rotation to reverse gear element REV to which dog ring DR may be integrated. Even though the reversal gear element REV can have larger diameter than before, there must be a gap i.e clearance between the reversal gear element REV and the input shaft S1. For example, regarding gearboxes of cars, preferably the gap i.e clearance is between 0,1 mm and 10 mm, and most preferably between 0,5 mm and 4 mm. This examples are for gearboxes of cars in normal use, in other areas such as in trucks or other heavy vehicles or in other devices the gap i.e clearance could be different.

The above mentioned dual role of the driver gear element R1A makes it possible to eliminate any reversal-mode dedicated special driver gear unit (as in prior art) from the input shaft S1.

In an embodiment, the further gear element REV is integrated to the locking means DR and vice versa. Alternatively, in a different embodiment the further gear element REV is separate from the locking means DR, but still arranged to be rotated by the rotation of the intermediate gear element R3, when the intermediate gear element R3 is axially moved by the shift element SE30 to a new position. Gear element R3 is moved in relation to shaft S3. In both embodiments, the intermediate gear element R3 is axially sliding on the shaft S3 to a new position, connecting driver gear element R1A and reversal mode further gear element REV.

Referring to above, in addition to the benefit of having a larger diameter of the locking means DR such as dog rig DR, it is possible also to have the input shaft S1 to have a larger diameter than before. Both benefits are caused by the lack any radial space requiring special reversal-mode dedicated driver gear unit (as in prior art) that would locate on the input shaft after the forward-mode driver gear. In an embodiment, at the point parallel to further gear element REV, the diameter of the input shaft S1 is between 20 mm and 40 mm, this example is for gearboxes of cars in normal use, in other areas such as trucks or other heavy vehicles or in other devices the diameter could be different.

Compared to the prior art, the diameter relation of the diameter of the intermediate gear element R3, in relation to diameter of the driver gear element R1A, can be made smaller than before, which makes it possible to have to intermediate gear element R3 to be parallel with the driver gear element R1A.

All of the gear elements such as R1A, R1B, R2A, R2B, R3 and REV are preferably metal sprockets.

It will be obvious to a person skilled in the art that, as the technology advances, the inventive concept can be implemented in various ways. The invention and its embodiments are not limited to the examples described above but may vary within the scope of the claims.

## Claims

1. Gearbox, comprising:
- a housing, an input shaft (S1) for receiving rotational movement, an output shaft (2) for outputting rotational movement, at least one pair of gear elements (R1A, R1B), said pair of gear elements comprising a driver gear element (R1A) on the input shaft (S1) and a driven gear element (R1B) on the output shaft (S2), said driver gear element (R1A) being arranged to rotate the driven gear element (R1B), the gearbox also comprising releasable locking means (DR, DR1) to lock, in a first mode of operation, the driven gear element (R1B) to the output shaft (S2) in order to rotate the output shaft (S2) to the first rotational direction,
the gearbox further comprising an intermediate gear element (R3) on an additional shaft (S3), the gearbox further comprising a further gear element (REV) on the output shaft (S2), said intermediate gear element (R3) being arranged to be moved to a position where, when the releasable locking means is, in a second mode of operation, in a released position, the intermediate gear element (R3) is arranged to rotate the further gear element (REV) that is on the output shaft (S2) and thereby also to rotate the output shaft (S2) to a reversal rotational direction that is opposite to said first rotation direction of the output shaft (S2),
**characterized in that** the same driver gear element (R1A) that in the first mode of operation is for rotating the driven gear element (R1B), is, in the second mode of operation, via the intermediate gear element (R3) arranged also to rotate the further gear element (REV) that is on the output shaft (S2) and thereby also to rotate the output shaft (S2) to a reversal rotational direction that is opposite to said first rotation direction of the output shaft (S2).

2. A gearbox according to claim 1, **characterized in that** the width, in the axial direction of the additional shaft (S3), of the intermediate gear element (R3) is greater than the distance between the opposing direction faced edges of the driver gear element (R1A) on the input shaft (S1) and the further gear element (REV) on the output shaft (S2).

3. A gearbox according to claim 2, **characterized in that** the width, in the axial direction of the additional shaft, of the intermediate gear element (R3) is at least 100 % greater than the distance between the opposing direction faced edges of the driver gear element (R1A) on the input shaft (S1) and the further gear element (REV) on the output shaft (S2).

4. A gearbox according any of claims 1-3, **characterized in that** at least 50 % of the width of the intermediate gear element (R3) is against the driver gear element (R1A) or the further gear element (REV).

5. A gearbox according any of claims 1-3, **characterized in that** the width of the driver gear element (R1A) is bigger than the width of the intermediate gear element (R3).

6. A gearbox according any of claims 1-3, **characterized in that** the further gear element (REV) is integrated to the locking means (DR).

7. A gearbox according any of claims 1-3, **characterized in that** the further gear element (REV) is separate from the locking means (DR).

8. A gearbox according any of claims 1-3, **characterized in that** the gearbox comprises a shift element (SE30) for moving the intermediate gear element (R3) in axial direction.

## Patentansprüche

1. Getriebe, das Folgendes umfasst:
- ein Gehäuse, eine Eingangswelle (S1) zum Aufnehmen einer Drehbewegung, eine Ausgangswelle (2) zum Ausgeben einer Drehbewegung, mindestens ein Paar von Zahnradelementen (R1A, R1B), wobei das Paar von Zahnradelementen ein Antriebszahnradelement (R1A) auf der Eingangswelle (S1) und ein Abtriebszahnradelement (R1B) auf der Ausgangswelle (S2) umfasst, wobei das Antriebszahnradelement (R1A) angeordnet ist, das Abtriebszahnradelement (R1B) zu drehen, wobei das Getriebe außerdem lösbare Verriegelungsmittel (DR, DR1) zum Verriegeln des Abtriebszahnradelements (R1B) in einem ersten Betriebsmodus an der Ausgangswelle (S2), um die Ausgangswelle (S2) in die erste Drehrichtung zu drehen, umfasst,
wobei das Getriebe ferner ein Zwischenzahnradelement (R3) auf einer zusätzlichen Welle (S3) umfasst, wobei das Getriebe ferner ein weiteres Zahnradelement (REV) auf der Ausgangswelle (S2) umfasst, wobei das Zwischenzahnradelement (R3) angeordnet ist, in eine Position bewegt zu werden, in der, wenn sich die lösbaren Verriegelungsmittel in einem zweiten Betriebsmodus in einer gelösten Position befinden, das Zwischenzahnradelement (R3) angeordnet ist, das weitere Zahnradelement (REV), das sich auf der Ausgangswelle (S2) befindet, zu drehen und dadurch auch die Ausgangswelle (S2) in eine umgekehrte Drehrichtung zu drehen, die der ersten Drehrichtung der Ausgangswelle (S2) entgegengesetzt ist,
**dadurch gekennzeichnet, dass** dasselbe Antriebszahnradelement (R1A), das im ersten Betriebsmodus dem Drehen des Abtriebszahnradelements (R1B) dient, im zweiten Betriebsmodus via das Zwischenzahnradelement (R3) angeordnet ist, auch das weitere Zahnradelement (REV), das sich auf der Ausgangswelle (S2) befindet, zu drehen und dadurch auch die Ausgangswelle (S2) in eine umgekehrte Drehrichtung zu drehen, die der ersten Drehrichtung der Ausgangswelle (S2) entgegengesetzt ist.

2. Getriebe nach Anspruch 1, **dadurch gekennzeichnet, dass** die Breite des Zwischenzahnradelements (R3) in der Axialrichtung der zusätzlichen Welle (S3) größer ist als der Abstand zwischen den der entgegengesetzten Richtung zugewandten Kanten des Antriebszahnradelements (R1A) auf der Eingangswelle (S1) und dem weiteren Zahnradelement (REV) auf der Ausgangswelle (S2).

3. Getriebe nach Anspruch 2, **dadurch gekennzeichnet, dass** die Breite des Zwischenzahnradelements (R3) in der Axialrichtung der zusätzlichen Welle um mindestens 100% größer ist als der Abstand zwischen den der entgegengesetzten Richtung zugewandten Kanten des Antriebszahnradelements (R1A) auf der Eingangswelle (S1) und dem weiteren Zahnradelement (REV) auf der Ausgangswelle (S2).

4. Getriebe nach einem der Ansprüche 1 bis 3, **dadurch gekennzeichnet, dass** mindestens 50% der Breite des Zwischenzahnradelements (R3) am Antriebszahnradelement (R1A) oder am weiteren Zahnradelement (REV) anliegt.

5. Getriebe nach einem der Ansprüche 1 bis 3, **dadurch gekennzeichnet, dass** die Breite des Antriebszahnradelements (R1A) größer ist als die Breite des Zwischenzahnradelements (R3) .

6. Getriebe nach einem der Ansprüche 1 bis 3, **dadurch gekennzeichnet, dass** das weitere Zahnradelement (REV) in die Verriegelungsmittel (DR) integriert ist.

7. Getriebe nach einem der Ansprüche 1 bis 3, **dadurch gekennzeichnet, dass** das weitere Zahnradelement (REV) von den Verriegelungsmitteln (DR) getrennt ist.

8. Getriebe nach einem der Ansprüche 1 bis 3, **dadurch gekennzeichnet, dass** das Getriebe ein Verschiebeelement (SE30) zum Bewegen des Zwischenzahnradelements (R3) in eine Axialrichtung umfasst.

## Revendications

1. Boîte de vitesse comprenant :
- un boîtier, un arbre d'entrée (S1) pour recevoir le mouvement de rotation, un arbre de sortie (2) pour transmettre le mouvement de rotation, au moins une paire d'éléments d'engrenage (R1A, R1B), ladite paire d'éléments d'engrenage comprenant un élément d'engrenage d'entraînement (R1A) sur l'arbre d'entrée (S1) et un élément d'engrenage entraîné (R1B) sur l'arbre de sortie (S2), ledit élément d'engrenage d'entraînement (R1A) étant agencé pour faire tourner l'élément d'engrenage entraîné (R1B), la boîte de vitesse comprenant également un moyen de verrouillage amovible (DR, DR1) pour verrouiller, dans un premier mode de fonctionnement, l'élément d'engrenage entraîné (R1B) sur l'arbre de sortie (S2) afin de faire tourner l'arbre de sortie (S2) dans la première direction de rotation,
la boîte de vitesse comprenant en outre un élément d'engrenage intermédiaire (R3) sur un arbre supplémentaire (S3), la boîte de vitesse comprenant en outre un autre élément d'engrenage (REV) sur l'arbre de sortie (S2), ledit élément d'engrenage intermédiaire (R3) étant agencé pour être déplacé dans une position dans laquelle, lorsque le moyen de verrouillage amovible est, dans un second mode de fonctionnement, dans une position libérée, l'élément d'engrenage intermédiaire (R3) est agencé pour faire tourner l'autre élément d'engrenage (REV) qui est sur l'arbre de sortie (S2) et ainsi faire également tourner l'arbre de sortie (S2) dans une direction de rotation inverse qui est opposée à ladite première direction de rotation de l'arbre de sortie (S2),
**caractérisée en ce que** le même élément d'engrenage d'entraînement (R1A) qui, dans le premier mode de fonctionnement, est prévu pour faire tourner l'élément d'engrenage entraîné (R1B), est, dans le second mode de fonctionnement, via l'élément d'engrenage intermédiaire (R3), agencé pour faire tourner également l'autre élément d'engrenage (REV) qui est sur l'arbre de sortie (S2) et ainsi faire également tourner l'arbre de sortie (S2) dans une direction de rotation inverse qui est opposée à ladite première direction de rotation de l'arbre de sortie (S2).

2. Boîte de vitesse selon la revendication 1, **caractérisée en ce que** la largeur, dans la direction axiale de l'arbre supplémentaire (S3), de l'élément d'engrenage intermédiaire (R3) est supérieure à la distance entre les bords orientés dans la direction opposée, de l'élément d'engrenage d'entraînement (R1A) sur l'arbre d'entrée (S1) et de l'autre élément d'engrenage (REV) sur l'arbre de sortie (S2) .

3. Boîte de vitesse selon la revendication 2, **caractérisée en ce que** la largeur, dans la direction axiale de l'arbre supplémentaire, de l'élément d'engrenage intermédiaire (R3) est au moins 100 % supérieure à la distance entre les bords orientés dans des directions opposées, de l'élément d'engrenage d'entraînement (R1A) sur l'arbre d'entrée (S1) et de l'autre élément d'engrenage (REV) sur l'arbre de sortie (S2) .

4. Boîte de vitesse selon l'une quelconque des revendications 1 à 3, **caractérisée en ce qu'**au moins 50 % de la largeur de l'élément d'engrenage intermédiaire (R3) est contre l'élément d'engrenage d'entraînement (R1A) ou l'autre élément d'engrenage (REV).

5. Boîte de vitesse selon l'une quelconque des revendications 1 à 3, **caractérisée en ce que** la largeur de l'élément d'engrenage d'entraînement (R1A) est supérieure à la largeur de l'élément d'engrenage intermédiaire (R3).

6. Boîte de vitesse selon l'une quelconque des revendications 1 à 3, **caractérisée en ce que** l'autre élément d'engrenage (REV) est intégré au moyen de verrouillage (DR).

7. Boîte de vitesse selon l'une quelconque des revendications 1 à 3, **caractérisée en ce que** l'autre élément d'engrenage (REV) est séparé du moyen de verrouillage (DR).

8. Boîte de vitesse selon l'une quelconque des revendications 1 à 3, **caractérisée en ce que** la boîte de vitesse comprend un élément de changement de vitesse (SE30) pour déplacer l'élément d'engrenage intermédiaire (R3) dans la direction axiale.
